# EUROPÄISCHE PATENTSCHRIFT

(11) **EP 1 410 978 B1**
(45) Veröffentlichungstag und Bekanntmachung des Hinweises auf die Patenterteilung: **07.06.2006**
(21) Anmeldenummer: 03018208.3
(22) Anmeldetag: 09.08.2003
(51) Int. Cl.: B62D 25/14, B62D 65/00

(54) **Vorrichtung zum lagegenauen Einbau eines Montageträgers für eine Schalttafel in ein Kraftfahrzeug**
Precise positionning device for the assembly of a support member for an instrument panel in a vehicule
Dispositif assurant un montage exact d'un support de tableau de bord pour véhicule automobile

(30) Priorität: 16.10.2002 DE 10248169
(43) Veröffentlichungstag der Anmeldung: 21.04.2004
(73) Patentinhaber: Dr.Ing. h.c.F. Porsche Aktiengesellschaft, 70435 Stuttgart (DE)
(72) Erfinder: Lösken, Marc, 68165 Mannheim (DE); Scheidel, Robert, 75031 Eppingen (DE)

(56) Entgegenhaltungen:
- EP-A- 1 129 927
- DE-A- 10 016 144
- DE-A- 10 113 094
- DE-A- 10 141 011

## Beschreibung

Die Erfindung bezieht sich auf eine Vorrichtung zum lagegenauen Einbau eines Montageträgers für eine Schalttafel nach dem Oberbegriff des Anspruchs 1.

Aus der DE 197 40 098 A1 ist ein Verfahren und eine Anordnung zum Einbau einer Schalttafel mit Schalttafelteilen bekannt. An einem Schalttafelträger ist eine Zeigervorrichtung angeordnet, welche eine Anzeige auf einen an der Karosserie in einen Einbaubereich der Schalttafelteile angeordnete Zeigeranzeigevorrichtung erzeugt, wobei die Zeigervorrichtung aus einem Laserprinter besteht, der eine einbrennbare Markierung erzeugt.

Aus der EP-A-1 129 927 ist eine Vorrichtung gemäß dem Oberbegriff des Anspruchs 1 bekannt.

Die Aufgabe der Erfindung besteht darin, eine Vorrichtung zum lagegenauen Einbau eines Montageträgers für eine Schalttafel in einem Kraftfahrzeug zu schaffen, die einfach zu handhaben ist und einen mittigen Einbau der Schalttafel mit einem gleichen Abstand zu Türinnenseitenverkleidungen gewährleistet.

Diese Aufgabe wird erfindungsgemäß durch die Merkmale des Patentanspruchs 1 gelöst. Weitere vorteilhafte Merkmale beinhalten die Unteransprüche.

Die mit der Erfindung erzielten Vorteile bestehen im wesentlichen darin, daß ein lagegenauer Schalttafeleinbau auch dann vorgenommen werden kann, wenn die Türen des Fahrzeugs nicht am Fahrzeug montiert sind. Hierzu ist nach der Erfindung vorgesehen, daß eine Einbaulehre verwendet wird, die mit der im Fahrzeug eingebauten Tür über mehrere Lagerpunkte verbindbar ist. Diese Einbaulehre umfaßt eine Positioniereinrichtung, welche endseitig ein Markierungselement aufweist, welches einen mit einer A-Säule des Fahrzeugs verbindbaren Befestigungswinkel für den Montageträger zugerichtet ist und der Winkel mittels eines Bolzens auf der Lehre positioniert gehalten wird.

Die Türen sind beim Einbau des Montageträgers ins Fahrzeug hinderlich, so daß diese als Bezugsflächen nicht zur Verfügung stehen. Der mit dem Fahrzeugaufbau verbindbare und über die Lehre positionierte Befestigungswinkel weist jeweils ortsfeste Verbindungsaufnahmen für eine Profilschiene des Montageträgers in X-Richtung und in Z-Richtung auf und die Profilschiene ist in Y-Richtung in Abhängigkeit von einer Markierung des Markierungselements ausrichtbar.

Das Markierungselement weist eine in X-Richtung ausgerichtete Hülse zur Markierung oder eine entsprechende Anzeigeeinrichtung auf. Der Montageträger ist über die Profilschiene mit dem aufbauseitig gehaltenen Befestigungswinkel verbunden, der im Bereich der Markierung in Y-Richtung ein quergerichtetes Langloch aufweist, das mit einer Skala versehen ist. Der Montageträger ist mit dem an den beiden A-Säulen des Fahrzeugs gehaltenen Befestigungswinkeln bei ausgebauten Türen verbindbar, derart, daß die Markierung in Y-Richtung zu der Skala an der Profilschiene ausmittelbar und ein etwa gleicher Abstand zwischen Türinnenfläche und stirnseitiger Fläche der Schalttafel einstellbar ist.

Durch die Einbaulehre wird in einfacher Weise eine Markierung am ortsfesten Befestigungswinkel angebracht, die dann bei ausgebauter Tür als Bezugspunkt für einen abstandsgleichen Einbau des Montageträgers verwendet wird, so daß aufwendige Einrichtungen entfallen können.

Ein Ausführungsbeispiel der Erfindung ist in den Zeichnungen dargestellt und wird im folgenden näher beschrieben.

Es zeigen
- Fig. 1: eine schaubildliche Darstellung einer mit einer montierten Tür verbundenen Einbaulehre,
- Fig. 2: einen Horizontalschnitt gemäß Linie II-II der Fig. 4 durch eine montierte Tür und einem Montageträger für eine Schalttafel,

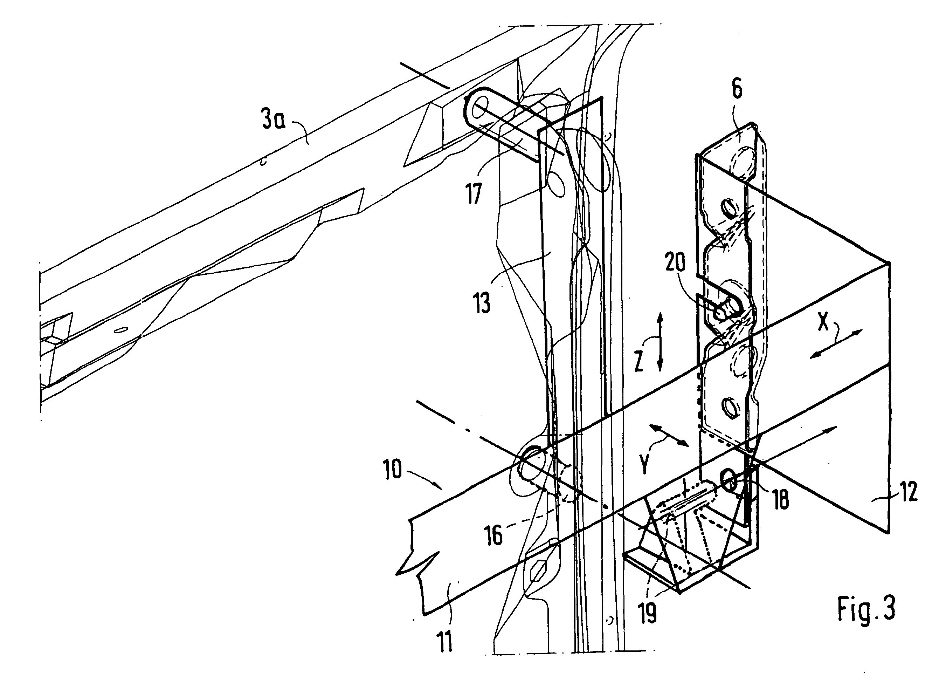

- Fig. 3: eine vergrößerte Darstellung auf ein Markierungselement der Einbaulehre und
- Fig. 4: eine Ansicht auf eine U-Profilschiene des Montageträgers in Pfeilrichtung A gem. Fig. 2 gesehen.

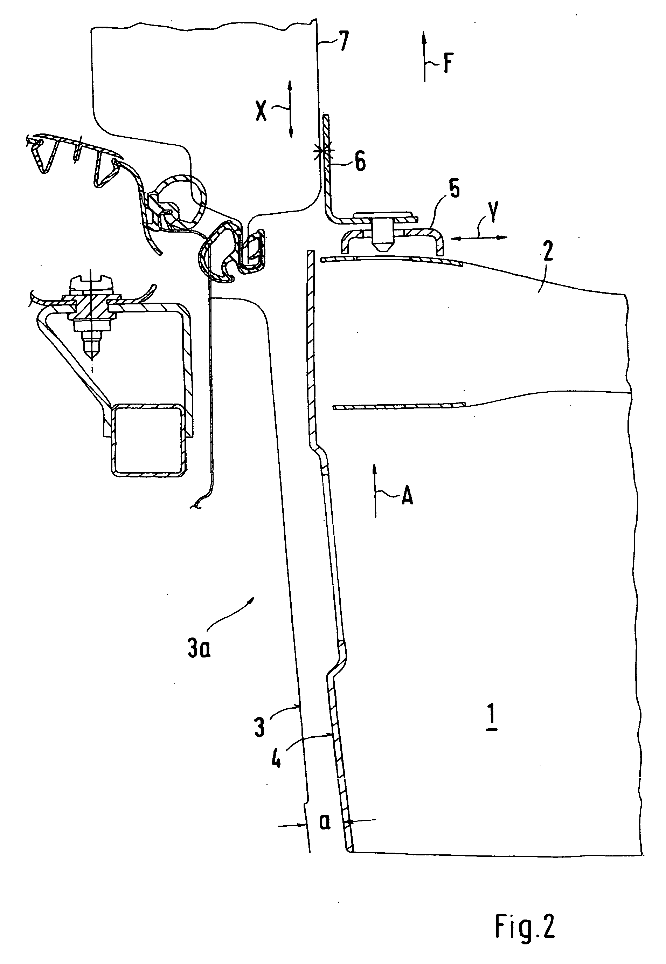

Ein Einbau einer Schalttafel 1 mittels eines Montageträgers 2 in eine Kraftfahrzeug soll in der Weise erfolgen, daß zwischen einer Innenfläche 3 einer Tür 3a und einer stirnseitigen Fläche 4 der Schalttafel 1 an beiden Seiten des Fahrzeugs ein gleicher Abstand a besteht. In Fig. 2 ist nur - in Bezug auf die Fahrtrichtung F - eine linke Seite des Fahrzeugs dargestellt.

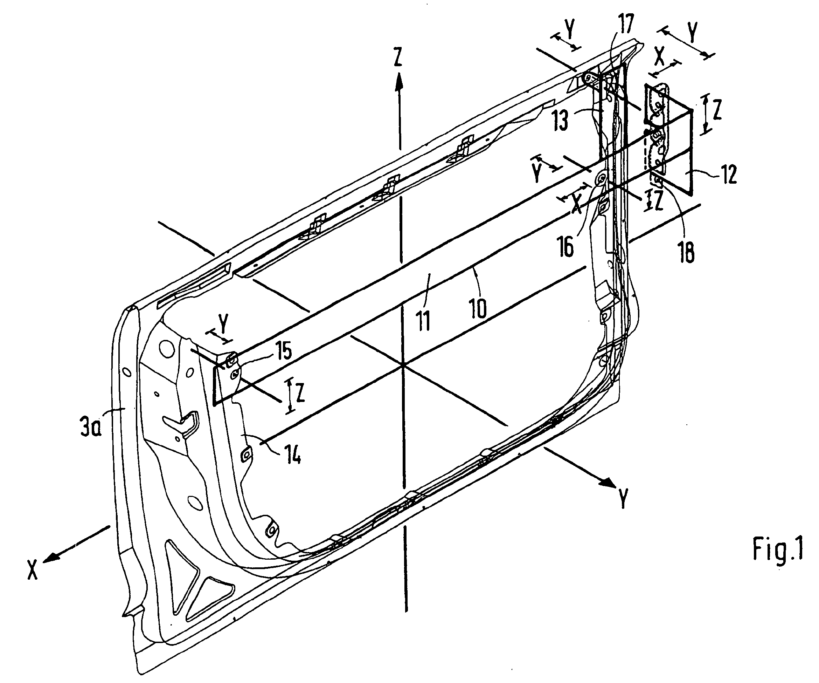

Der Montageträger 2 ist mittels einer U-Profilschiene 5 mit einem Befestigungswinkel 6 verbunden, die an einer A-Säule 7 des Fahrzeugaufbaus gehalten ist. Der Befestigungswinkel 6 fixiert den Montageträger 2 und somit auch die Schalttafel 1 in X-Richtung und in Z-Richtung; dagegen erfolgt keine Fixierung in Y-Richtung. Diese Fixierung in Y-Richtung erfolgt mittels einer Einbaulehre 10, wie sie in Fig. 1 näher dargestellt ist. Sie besteht im wesentlichen aus einer langgestreckten Positioniereinrichtung 11, gebildet aus einem ersten Stegteil und einem abgewinkelten Markierungselement 12 sowie einem hochstehenden zweiten Stegteil 13. Die Positioniereinrichtung ist mit einem abgestellten Türinnenblechrand 14 in den Lagerpunkten 15, 16 und 17 verbunden, an das sich eine Türinnenverkleidung anschließt, die nicht dargestellt ist.

Zum Markieren des Punktes 18 am Befestigungswinkel 6 besteht das Markierungselement 12 aus einer Hülse 19 oder einer Anzeigeeinrichtung. Durch die Hülse 19 kann ein manuelles Anreißen und durch die Anzeigeeinrichtung in sonstiger Weise eine Markierung 18 angebracht werden. Das Markierungselement 12 wird vor dem Markieren des Punktes 18 auf einem Bolzen 20 des Befestigungswinkels 6 übergesteckt, damit die genaue Position in X- und in Z-Richtung eingestellt und übernommen wird. Die X- und Z- Richtung des Winkels 6 wird in Abhängigkeit vom Türinnenblech somit durch die Lehre 10 bestimmt. Hierzu ist der Winkel 6 auf die Lehre 10 gesteckt.

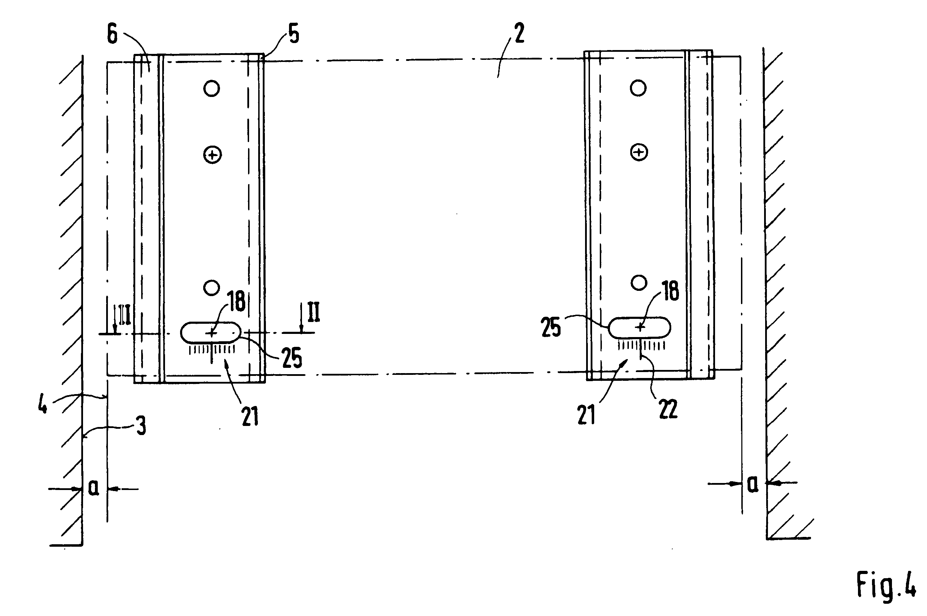

Beim Einbau des Montageträgers 2 für die Schalttafel 1 kann jetzt die Profilschiene 5 entsprechend zu einer Skala 21 verschoben werden, die innerhalb der Profilschiene 5 unterhalb eines Langloches 25 aufgezeichnet ist. Wie in Fig. 4 näher zu erkennen ist, zeigt die Skala 21 links und rechts eine identische Position an. Da das lichte Maß a zwischen der Tür variabel sein kann, zeigt die Mitte 22 der Skala 2 nicht automatisch ein gleiches Maß a für die linke und rechte Seite an, da der Rohbau in seiner Breite Y Toleranzen unterliegt. Über die Skala 21 kann somit eine entsprechende Ausmittlung zum Einbau erfolgen, damit beide Seiten ein gleiches Maß a aufweisen können.

## Patentansprüche

1. Vorrichtung zum lagegenauen Einbau eines Montageträgers einer Schalttafel beabstandet zur Innenseite einer Tür in einem Kraftfahrzeug mittels einer Einbaulehre, **dadurch gekennzeichnet, daß** die Einbaulehre (10) ein mit der im Fahrzeug eingebauten Tür (3a) über mehrere Lagerpunkte (15, 16, 17) verbindbare Positioniereinrichtung (11) umfaßt, die endseitig ein Markierungselement (12) aufweist, welches einen mit einer A-Säule (7) des Fahrzeugs verbundenen Befestigungswinkel (6) für den Montageträger (2) zugerichtet ist und die Lehre (10) über einen Bolzen (20) den Winkel (6) positioniert in X- und Z-Richtung hält und eine Markierung (18) am Winkel (6) in Y-Richtung anbringbar ist.

2. Vorrichtung nach Anspruch 1, **dadurch gekennzeichnet, daß** der mit dem Fahrzeugaufbau verbindbare Befestigungswinkel (6) ortsfeste Verbindungsaufnahmen für eine Profilschiene (5) des Montageträgers (2) in X-Richtung und in Z-Richtung aufweist und die Profilschiene (5) in Y-Richtung in Abhängigkeit von der Markierung (18) des Markierungselements (12) ausrichtbar ist.

3. Vorrichtung nach den Ansprüchen 1 oder 2, **dadurch gekennzeichnet, daß** das Markierungselement (12) eine in X-Richtung ausgerichtete Hülse (19) oder eine Anzeigeeinrichtung aufweist.

4. Vorrichtung nach den Ansprüchen 1, 2 oder 3, **dadurch gekennzeichnet, daß** der Montageträger (2) über die Profilschiene (5) mit dem aufbauseitig gehaltenen Befestigungswinkel (6) verbunden ist, der im Bereich der Markierung (18) in Y-Richtung ein quergerichtetes Langloch (25) aufweist, das mit einer Skala (21) versehen ist.

5. Vorrichtung nach einem der vorhergehenden Ansprüche, **dadurch gekennzeichnet, daß** der Montageträger (2) mit dem an den beiden A-Säulen (7) des Fahrzeugs gehaltenen Befestigungswinkeln (6) bei ausgebauten Türen (3a) verbindbar ist, derart, daß die Markierung (18) in Y-Richtung zu der Skala (21) an der Profilschiene (5) ausmittelbar und ein gleicher Abstand (a) zwischen Türinnenfläche (3) und stirnseitiger Fläche (4) der Schalttafel, (2) einstellbar ist.

## Claims

1. An apparatus for fitting a mounting support of an instrument panel in the precise position at a distance from the inside of a door in a motor vehicle by means of a fitting gauge, **characterized in that** the fitting gauge (10) comprises a positioning device (11) which is capable of being connected by way of a plurality of bearing points (15, 16, 17) to the door (3a) fitted in the vehicle and the end of which has a marking element (12) which is directed towards a fastening angle member (6) - connected to an A-column (7) of the vehicle - for the mounting support (2), and the gauge (10) holds the angle member (6) positioned in the X and Z directions by way of a pin (20), and a marking (18) is capable of being attached to the angle member (6) in the Y direction.

2. An apparatus according to Claim 1, **characterized in that** the fastening angle member (6) capable of being connected to the vehicle body has stationary connecting receiving means for a profiled rail (5) of the mounting support (2) in the X direction and in the Z direction, and the profiled rail (5) is capable of being orientated in the Y direction in a manner dependent upon the marking (18) of the marking element (12).

3. An apparatus according to Claims 1 or 2, **characterized in that** the marking element (12) has a sleeve (19) orientated in the X direction or a display device.

4. An apparatus according to Claims 1, 2 or 3, **characterized in that** the mounting support (2) is connected by way of the profiled rail (5) to the fastening angle member (6) which is held on the body and which has a transversely directed elongate hole (25) - which is provided with a scale (21) - in the region of the marking (18) and in the Y direction.

5. An apparatus according to any one of the preceding Claims, **characterized in that**, when the doors (3a) are dismantled, the mounting support (2) is capable of being connected to the fastening angle members (6) held on the two A-columns (7) of the vehicle, in such a way that the marking (18) is capable of being averaged on the profiled rail (5) in the Y direction with respect to the scale (21), and an equal distance (a) is capable of being set between the inner face (3) of the door and the end face (4) of the instrument panel (2) [*sic - recte* (1)]*.*

## Revendications

1. Dispositif pour le montage exact d'un support de montage pour un tableau de bord, écarté de la face intérieure d'une porte, dans un véhicule automobile, au moyen d'un gabarit de montage, **caractérisé en ce que** le gabarit de montage (10) comporte un dispositif de positionnement (11) qui peut être assemblé, au niveau de plusieurs points d'appui (15, 16, 17), avec la porte (3a) montée dans le véhicule et qui comporte sur une extrémité un élément de marquage (12), qui est associé à une cornière de fixation (6) pour le support de montage (2), destinée à être assemblée à une colonne A du véhicule, et le gabarit (10) maintient la cornière (6) positionnée dans la direction X et la direction Z au moyen d'un boulon (20) et un repère (18) peut être réalisé sur la cornière (6) dans la direction Y.

2. Dispositif selon la revendication 1, **caractérisé en ce que** la cornière de fixation (6), destinée à être assemblée à la carrosserie du véhicule, comporte des logements d'assemblage fixes pour un rail profilé (5) du support de montage (2) dans la direction X et la direction Z et le rail profilé (5) peut être ajusté dans la direction Y en fonction du repère (18) de l'élément de marquage (12).

3. Dispositif selon la revendication 1 ou 2, **caractérisé en ce que** l'élément de marquage (12) comporte un manchon (19) orienté dans la direction X ou un dispositif indicateur.

4. Dispositif selon la revendication 1, 2 ou 3, **caractérisé en ce que** le support de montage (2) est assemblé au moyen du rail profilé (5) avec la cornière de fixation (6), qui est maintenue du côté carrosserie et qui, dans la zone du repère (18) dans la direction Y, comporte un trou oblong (25), qui est orienté transversalement et est muni d'une graduation (21).

5. Dispositif selon l'une quelconque des revendications précédentes, **caractérisé en ce que** le support de montage (2) peut être assemblé à la cornière de fixation (6), maintenue contre les deux colonnes A (7) du véhicule, de telle sorte que le repère (18) peut être ajusté dans la direction Y par rapport à la graduation (21) sur le rail profilé (5) et une même distance (a) peut être réglée entre la face intérieure (3) de la porte et la face frontale (4) du tableau de bord (1).
